# EUROPEAN PATENT APPLICATION

(11) **EP 4 450 678 A1**
(43) Date of publication of application: **23.10.2024**
(21) Application number: 22908028.8
(22) Date of filing: 16.12.2022
(51) Int. Cl.: C23C 22/20, C23C 22/22

(54) **INSULATING COATING COMPOSITION FOR ELECTRICAL STEEL SHEET, ELECTRICAL STEEL SHEET, AND METHOD FOR MANUFACTURING SAME**

(30) Priority: 17.12.2021 KR 20210182146
(71) Applicant: POSCO Co., Ltd, Pohang-si, Gyeongsangbuk-do 37859 (KR)
(72) Inventor: KIM, Jungwoo, Pohang-si, Gyeongsangbuk-do 37859 (KR); HA, Bongwoo, Pohang-si, Gyeongsangbuk-do 37859 (KR); LEE, Donggyu, Pohang-si, Gyeongsangbuk-do 37859 (KR); NO, Taeyoung, Pohang-si, Gyeongsangbuk-do 37859 (KR)
(74) Representative: Meissner Bolte Partnerschaft mbB
(86) International application number: PCT/KR2022/020651
(87) International publication number: WO 2023/113563

(57) **Abstract**

An insulating coating composition for an electrical steel sheet, according to an embodiment of the present invention, comprises, on the basis of 100 wt% of a total composition: 10 to 50 wt% of a first composition including first inorganic material particles and second inorganic material particles; 10 to 50 wt% of a second composition including a metal phosphate; and 20 to 60 wt% of an organic/inorganic composite in which inorganic nano particles are substituted in an organic resin.

## Description

### [Technical Field]

An exemplary embodiment of the present disclosure relates to an insulating coating composition for an electrical steel sheet, an electrical steel sheet, and a method for manufacturing the same. Specifically, an exemplary embodiment of the present disclosure relates to an insulating coating composition for an electrical steel sheet which excludes a chromate for solving environmental problems, improves denseness of an electrical steel sheet coating layer by using a mixture of inorganic particles having different shapes and sizes from each other, and may express a highly functional (highly insulating, high-temperature resistant, corrosion resistant, adhesive, and recoatable) surface using a metal phosphate substituted with various metals and an organic/inorganic composite having excellent adhesive strength to an electrical steel sheet material in order to meet thermal resistance at a high temperature, an electrical steel sheet, and a method for manufacturing the same.

### [Background Art]

In general, a non-oriented electrical steel sheet is a steel sheet having uniform magnetic properties in all directions on a rolled plate, and is being widely used in motors, iron cores of generators, electric motors, small transformers, and the like. In particular, the trend of a non-oriented electrical steel sheet is moving toward higher quality for low iron loss for reducing electricity loss (refrigerator or factory motors), high magnetic flux density for small size/high efficiency (motor for a vacuum cleaner or the like), and ultra-thinness corresponding to increased frequency for high output (OA devices or electric vehicle drive motors).

In terms of efficient use of energy in the non-oriented electrical steel sheet riding the wave of higher quality as described above, a thick insulating film (thick film) is essential for high insulation. For example, the non-oriented electrical steel sheet used for medium and large electric motors, generators, and transformers requires an insulating coating which provides a high level of insulation for minimizing interlayer current loss, when used as a laminate of a motor core. A high level of insulation as such may be required also after a heat treatment such as thermal resistance and stress-relief annealing (SRA) treatment.

In addition, since a high-grade non-oriented electrical steel sheet has a high silicon content, it involves an inferior processability problem of imparting much stress on a slitter and a press during slitting and punching working due to increased material hardness, and requires coating formation by a thick film. The high-grade non-oriented electrical steel sheet as such is expected to lead the future of electrical/electronics business.

There are largely three types of non-oriented electrical steel sheet insulating coating agents which are inorganic, organic, and organic/inorganic composite coating solutions, and a method of first applying an inorganic coating solution and then coating an organic coating solution is being studied. Combinations of various compositions are applied in the manufacture of an insulating coating agent for improving insulation of the non-oriented electrical steel sheet, and most of the insulating coating agents which are currently productized by major manufacturers are based on a phosphate and a chromate. The phosphate and the chromate serve to greatly improve thermal resistance, insulation, and corrosion resistance of a material metal. However, a chromium oxide contained in the coating solution may have an adverse effect on the human body and cause an environmental problem. Due to the problem, environmental regulations such as regulations on prohibition of the use of hazardous substances between EU member states for heavy metal substances including hexavalent chromium (RoHS: Restriction of the use of Hazardous Substances) are being strengthened, and thus, the use of the insulating coating agent including a chromate is bound to be limited. Therefore, recently, a chromium-free electrical steel sheet coating agent has been actively developed, but a study of a new insulating coating agent for reinforcing corrosion resistance and adhesiveness weakened due to the absence of a chromate is needed.

### [Disclosure]

### [Technical Problem]

The present disclosure attempts to provide an insulating coating composition for an electrical steel sheet capable of having a highly functional (highly insulating, high-temperature resistant, corrosion resistant, adhesive, and recoatable) surface, by excluding a chromate for solving an environmental problem, using a mixture of inorganic particles having different shapes and sizes from each other, and using a composite metal phosphate and/or an organic/inorganic composite, an electrical sheet, and a method for manufacturing the same.

### [Technical Solution]

An exemplary embodiment of the present disclosure provides an insulating coating composition for an electrical steel sheet including: 10 to 50 wt% of a first composition including first inorganic particles and second inorganic particles; 10 to 50 wt% of a second composition including a metal phosphate; and 20 to 60 wt% of a third composition including an organic/inorganic composite in which inorganic nanoparticles are substituted into an organic resin, based on 100 wt% of the total composition.

The first inorganic particles and the second inorganic particles are different types from each other, and may be selected from the group consisting of barium sulfate (Ba₂SO₄), titanium dioxide (TiO₂), calcium carbonate (CaCOs), clay (Al₂Si₂O₅(OH)₄), and silicon dioxide (SiO₂), respectively.

The metal phosphate may include one or more metals selected form the group consisting of Al, Co, Ca, Zn, Mn, Mg, Zr, and Fe.

When the metal phosphate includes a composite metal phosphate of a first metal phosphate and a second metal phosphate, the first metal phosphate is an Al phosphate and the second metal phosphate may include a metal selected from the group consisting of Co, Ca, Zn, Mn, Mg, Zr, and Fe.

The first metal phosphate may be included at 60 to 80 wt% and the second metal phosphate may be included at 20 to 40 wt%, based on 100 wt% of the second composition.

The organic resin may be one or more selected from the group consisting of epoxy-based resins, ester-based resins, acryl-based resins, styrene-based resins, urethane-based resins, and ethylene-based resins.

The inorganic nanoparticles may be one or more selected from the group consisting of SiO₂, Al₂O₃, TiO₂, MgO, ZnO, and ZrO₂.

The organic/inorganic composite may be one or more selected from the group consisting of epoxy/SiO₂, epoxy/Al₂O₃, epoxy/TiO₂, ester/SiO₂, ester/ZnO, acryl/SiO₂, acryl/Al₂O₃, acryl/ZnO, acryl/ZrO₂, styrene/SiO₂, styrene/TiO₂, styrene/MgO, urethane/SiO₂, urethane/Al₂O₃, urethane/ZnO, ethylene/SiO₂, ethylene/Al₂O₃, and ethylene/ZnO.

A substitution rate of the inorganic nanoparticles which are substituted into the organic resin in the organic/inorganic composite may be 1 to 50%.

The inorganic nanoparticles may have an average particle size of 1 to 100 nm.

Another exemplary embodiment of the present disclosure provides an electrical steel sheet including: an electrical steel sheet substrate and an insulating coating placed on a surface of the electrical steel sheet substrate, wherein the insulating coating includes: 10 to 50 wt% of a first composition including first inorganic particles and second inorganic particles; 10 to 50 wt% of a second composition including a metal phosphate; and 20 to 60 wt% of a third composition including an organic/inorganic composite in which inorganic nanoparticles are substituted into an organic resin, based on 100 wt% of the total composition.

The insulating coating may have a thickness of 1 to 10 µm.

Still another exemplary embodiment of the present disclosure provides a method for manufacturing an electrical steel sheet including: preparing an electrical steel sheet substrate; applying the insulating coating composition of any one of claims 1 to 10 on a surface of the electrical steel sheet substrate; and heat-treating the electrical steel sheet substrate on which the insulating coating composition has been applied.

### [Advantageous Effects]

According to an exemplary embodiment of the present disclosure, the insulating coating has excellent corrosion resistance and adhesiveness even without chromium.

In addition, according to an exemplary embodiment of the present disclosure, the electrical steel sheet has an excellent highly functional surface having high insulation, high-temperature thermal resistance, corrosion resistance, adhesiveness, and customer recoatability simultaneously.

### [Description of the Drawings]

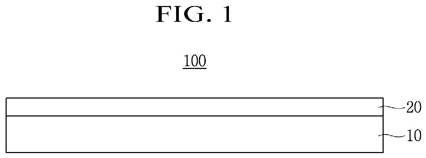

FIG. 1 is a schematic diagram of a cross-section of an electrical steel sheet according to an exemplary embodiment of the present disclosure.

### [Mode for Invention]

The terms such as first, second, and third are used for describing various parts, components, areas, layers, and/or sections, but are not limited thereto. These terms are used only for distinguishing one part, component, area, layer, or section from other parts, components, areas, layers, or sections. Therefore, a first part, component, area, layer, or section described below may be mentioned as a second part, component, area, layer, or section without departing from the scope of the present disclosure.

The terminology used herein is only for mentioning a certain example, and is not intended to limit the present disclosure. Singular forms used herein also include plural forms unless otherwise stated clearly to the contrary. The meaning of "comprising" used in the specification is embodying certain characteristics, areas, integers, steps, operations, elements, and/or components, but is not excluding the presence or addition of other characteristics, areas, integers, steps, operations, elements, and/or components.

When it is mentioned that a part is "on" or "above" the other part, it means that the part is directly on or above the other part or another part may be interposed therebetween. In contrast, when it is mentioned that a part is "directly on" the other part, it means that nothing is interposed therebetween.

Though not defined otherwise, all terms including technical terms and scientific terms used herein have the same meaning as commonly understood by a person with ordinary skill in the art to which the present disclosure pertains. Terms defined in commonly used dictionaries are further interpreted as having a meaning consistent with the related technical literatures and the currently disclosed description, and unless otherwise defined, they are not interpreted as having an ideal or very formal meaning.

Hereinafter, an exemplary embodiment of the present disclosure will be described in detail so that a person with ordinary skill in the art to which the present disclosure pertains may easily carry out the disclosure. As those skilled in the art would realize, the described embodiments may be modified in various different ways, all without departing from the spirit or scope of the present disclosure.

An insulating coating composition for an electrical steel sheet according to an exemplary embodiment of the present disclosure includes: 10 to 50 wt% of a first composition including first inorganic particles and second inorganic particles; 10 to 50 wt% of a second composition including a metal phosphate; and 20 to 60 wt% of a third composition including an organic/inorganic composite in which inorganic nanoparticles are substituted into an organic resin, based on 100 wt% of the total composition.

The insulating coating composition for an electrical steel sheet according to an exemplary embodiment of the present disclosure may have improved insulation, high-temperature thermal resistance, corrosion resistance, adhesiveness, and customer recoatability by adjusting components and component ratios in the composition.

Hereinafter, the components of the insulating coating composition for an electrical steel sheet according to an exemplary embodiment of the present disclosure will be described in detail.

The insulating coating composition for an electrical steel sheet according to an exemplary embodiment of the present disclosure may include 10 to 50 wt% of a first composition including first inorganic particles and second inorganic particles, based on 100 wt% of the total composition. The first composition serves as an extender, and to improve thermal resistance and insulation resistance. When the content of the first composition is too low, thermal resistance and insulation resistance properties become poor. However, when the content of the first composition is too high, coating workability and corrosion resistance become poor.

The first inorganic particles and the second inorganic particles are different types from each other, and may be selected from the group consisting of barium sulfate (Ba₂SO₄), titanium dioxide (TiO₂), calcium carbonate (CaCOs), clay (Al₂Si₂O₅(OH)₄), and silicon dioxide (SiO₂), respectively.

The inorganic particles may have different shapes and particle sizes depending on the type. For example, barium sulfate may use a stick pillar shape having an average particle size of 1 to 3 µm, titanium dioxide may use a spherical shape having an average particle size of 50 to 100 nm, calcium carbonate may use an amorphous shape having an average particle size of 2 to 5 µm, silicon dioxide may use an amorphous shape having an average particle size of 2 to 4 µm, and clay may use a plate-shaped crystal having an average particle size of 0.2 to 5.0 µm. By using different types of inorganic particles having different shapes and particle sizes from each other as the first inorganic particles and the second inorganic particles, an effect of adjusting a filling content of the inorganic material in the coating layer and an inorganic dispersion effect may be obtained.

The insulating coating composition for an electrical steel sheet according to an exemplary embodiment of the present disclosure may include 10 to 50 wt% of the second composition including a metal phosphate, based on 100 wt% of the total composition.

The metal phosphate serves to improve corrosion resistance and insulation.

The metal phosphate may include one or more metals selected from the group consisting of Al, Co, Ca, Zn, Mn, Mg, Zr, and Fe. Specifically, the phosphate may include one or more metals selected from the group consisting of Al, Co, Ca, Zn, Mn, and Mg. For example, a phosphate including Al may be first aluminum phosphate (Al(H₃PO₄)₃), a phosphate including Co may be first cobalt phosphate (Co(H₃PO₄)₂), a phosphate including Ca may be first calcium phosphate (Ca(H₃PO₄)₂), a phosphate including Zn may be first zinc phosphate (Zn(H₃PO₄)₂), a phosphate including Mn may be first manganese phosphate (Mn(H₂PO₄)₂), and a phosphate including Mg may be first magnesium phosphate (Mg(H₃PO₄)₂.

When the metal phosphate includes a composite metal phosphate of the first metal phosphate and the second metal phosphate, the first metal phosphate may be Al phosphate, and the second metal phosphate may include a metal selected from the group consisting of Co, Ca, Zn, Mn, Mg, Zr, and Fe. Specifically, the second metal phosphate may include a metal selected from the group consisting of Co, Ca, Zn, Mn, and Mg. In this case, the Al phosphate as the first metal phosphate may be included at 60 to 80 wt% and the second metal phosphate may be included at 20 to 40 wt%, based on 100 wt% of the second composition. Specifically, the Al phosphate as the first metal phosphate may be included at 65 to 75 wt% and the second metal phosphate may be included at 25 to 35 wt%. When the content of the Al phosphate as the first metal phosphate is too low, corrosion resistance may become poor, and when the content of the Al phosphate is too high, weather resistance may become poor. When the content of the second metal phosphate is too low, adhesiveness may become poor, and when the content of the second metal phosphate is too high, weather resistance may become poor.

The metal phosphate may be prepared by a reaction between a metal hydroxide (Mₓ(OH)_{y}, M is a metal) or a metal oxide (MₓO, M is a metal) and phosphoric acid (H₃PO₄). For example, when 100 wt% of a phosphoric acid aqueous solution including 85 wt% of free phosphoric acid phosphorus (H₃PO₄) is a basis, a metal hydroxide (Mₓ(OH)_{y}) or a metal oxide (MₓO) is added respectively, and the reaction is performed at 80 to 90°C for 6 to 10 hours, each metal phosphate may be obtained.

The insulating coating composition for an electrical steel sheet according to an exemplary embodiment of the present disclosure may include 20 to 60 wt% of the third composition including an organic/inorganic composite in which inorganic nanoparticles are substituted into an organic resin, based on 100 wt% of the total composition.

The organic/inorganic composite is formed of an organic resin and inorganic nanoparticles, and the inorganic nanoparticles are substituted into some or all of the functional group of the organic resin, and may be present in the composition in which the organic resin and the inorganic nanoparticles are bonded. When the inorganic nanoparticles are added alone without being bonded to the resin, the inorganic nanoparticles aggregate together and are not dispersed.

The resin in the organic/inorganic composite serves to impart insulation to the insulating coating and impart adhesiveness of the insulating coating and the steel sheet substrate, the inorganic nanoparticles prevent precipitation or agglomeration of the metal phosphate and contribute to better expression of surface properties after stress relief annealing.

The insulating coating composition may include 20 to 60 wt% of the organic/inorganic composite based on 100 wt% of the total composition. Specifically, the third composition may be included at 30 to 50 wt%, more specifically 35 to 45 wt%. When the organic/inorganic composite is included too little, it is difficult to properly secure the insulation and the adhesiveness described above. In contrast, when the organic/inorganic composite is included too much, addition of the metal phosphate is relatively decreased and it may be difficult to secure high-temperature thermal resistance and the like.

A substitution rate of the inorganic nanoparticles in the organic resin in the organic/inorganic composite may be 1 to 50%. Specifically, the substitution rate of the inorganic nanoparticles may be 10 to 30%. When the substitution rate of the inorganic nanoparticles is too low, insulation resistance properties may become poor. In contrast, when the substitution rate of the inorganic nanoparticles is too high, corrosion resistance and customer processability (punchability) may become poor.

The organic resin refers to an organic polymer compound and is a concept contrasting with a monomer. Specifically, the organic resin may be one or more selected from the group consisting of epoxy-based resins, ester-based resins, melamine-based resins, siloxane-based resins, acryl-based resins, phenol-based resins, styrene-based resins, vinyl-based resins, urethane-based resins, and ethylene-based resins. More specifically, the organic resin may be one or more selected from the group consisting of epoxy-based resins, ester-based resins, acryl-based resins, styrene-based resins, urethane-based resins, and ethylene-based resins. Herein, the epoxy-based resin refers to, for example, a resin having an epoxy group or a group derived from the epoxy group in the main chain.

Inorganic nanoparticles prevent precipitation or agglomeration of the insulating coating composition and contributes to better expression of properties after stress relief annealing.

The inorganic nanoparticles may be one or more selected from the group consisting of SiO₂, Al₂O₃, TiO₂, MgO, ZnO, and ZrO₂. Specifically, they may be one or more selected from the group consisting of SiO₂, Al₂O₃, TiO₂, and ZnO.

Inorganic nanoparticles may have an average particle size of 1 to 100 nm.

When the average particle size of the inorganic nanoparticles is too small, dispersibility of the nanoparticles in the coating solution becomes poor. However, when the average particle size of the inorganic nanoparticles is too large, coating workability becomes poor.

The organic/inorganic composite may be, specifically, one or more selected from the group consisting of epoxy/SiO₂, epoxy/Al₂O₃, epoxy/TiO₂, ester/SiO₂, ester/ZnO, acryl/SiO₂, acryl/Al₂O₃, acryl/ZnO, acryl/ZrO₂, styrene/SiO₂, styrene/TiO₂, styrene/MgO, urethane/SiO₂, urethane/Al₂O₃, urethane/ZnO, ethylene/SiO₂, ethylene/Al₂O₃, and ethylene/ZnO. More specifically, it may be one or more selected from the group consisting of epoxy/SiO₂, ester/SiO₂, acryl/ZnO, styrene/TiO₂, urethane/Al₂O₃, and ethylene/Al₂O₃.

In addition to the components described above, the insulating coating composition may include a solvent for easy application and uniform dispersion of components. Though the amount of the solvent is not particularly limited, it may be 50 parts by weight to 1000 parts by weight based on 100 parts by weight of the total solid content of the insulating coating composition. In an exemplary embodiment of the present disclosure, a part by weight refers to a relative ratio between weights of the components. A solid content refers to a weight of components other than volatile components such as the solvent in the insulating coating composition.

An electrical steel sheet 100 according to an exemplary embodiment of the present disclosure includes an electrical steel sheet substrate 10 and an insulating coating 20 placed on the electrical steel sheet substrate 10.

As the electrical steel sheet substrate 10, a common non-oriented or oriented electrical steel sheet may be used without limitation. Since an exemplary embodiment of the present disclosure has a main configuration of forming the insulating coating 20 of special components on the electrical steel sheet substrate 10, detailed description of the electrical steel sheet substrate 10 will be omitted.

The insulating coating 20 may have a thickness of 1 to 10 µm. When the insulating coating 20 is too thin, it is difficult to secure appropriate insulation. When the insulating coating 20 is too thick, a drip rate may be lowered. In an exemplary embodiment of the present disclosure, appropriate insulation may be secured even in the case of forming the thin insulating coating 20. More specifically, the insulating coating 20 may have a thickness of 4 to 8 µm.

The insulating coating 20 may maintain the component and the content ratio in the insulating coating composition described above. Specifically, the insulating coating 20 may include 10 to 50 wt% of a first composition including first inorganic particles and second inorganic particles; 10 to 50 wt% of a second composition including a metal phosphate; and 20 to 60 wt% of a third composition including an organic/inorganic composite in which inorganic nanoparticles are substituted into an organic resin, based on 100 wt% of the total composition.

In addition, since the configuration of the insulating coating 20 has been described in detail in relation to the insulating coating composition, repeated description will be omitted.

A method for manufacturing an electrical steel sheet according to an exemplary embodiment of the present disclosure includes: preparing an electrical steel sheet substrate; applying an insulating coating composition on a surface of the electrical steel sheet substrate; and heat-treating the electrical steel sheet substrate on which the insulating coating composition has been applied.

First, an electrical steel sheet substrate is prepared. As the electrical steel sheet substrate 10, a common non-oriented or oriented electrical steel sheet may be used without limitation. Since forming the insulating coating 20 of special components on the electrical steel sheet substrate 10 is the main configuration in an exemplary embodiment of the present disclosure, the detailed description of the method for manufacturing the electrical steel sheet substrate 10 will be omitted.

Next, the insulating coating composition is applied on a surface of the electrical steel sheet substrate. Since the insulating coating composition is as described above, detailed description will be omitted.

Next, the electrical steel sheet substrate on which the insulating coating composition has been applied is heat treated. A heat treatment temperature may be 200 to 400°C. When the temperature is too low, it takes a long time to form a coating and efflorescence may occur. When the temperature is too high, corrosion resistance, thermal resistance, insulation resistance, and bluing resistance may be deteriorated due to cracking.

Hereinafter, the preferred examples, the comparative examples for comparing with the examples, and the evaluation examples thereof will be described. However, the following examples are only a preferred example of the present disclosure, and the present disclosure is not limited to the following examples.

### Experimental Example 1

First, compatibility of a mixed solution of inorganic particles forming a first composition and a metal phosphate as a second composition was evaluated to perform an experiment for determining the type of inorganic particles and metal phosphate to be used. The method of evaluating the compatibility of the inorganic particles and the metal phosphate was first, mixing 30 to 70 wt% of the metal phosphate and 30 to 70 wt% of the inorganic particles by weight, performing mixing (blending) at a high speed agitator (1000-3000 RPM), maintaining the mixture at room temperature for 24 hours, and then evaluating compatibility depending on gelation and phase separation degrees of the solution.

In the compatibility evaluation, barium sulfate (Ba₂SO₄), titanium dioxide (TiO₂), clay (Al₂Si₂O₅(OH)₄), calcium carbonate (CaCOs), silica (SiO₂), and talc (3MgO.4SiO₂.H₂O) were used, and the shape and basic physical properties of each inorganic particles are specified in the following Table 1:

**(Table 1)**

| Type of particles | Particle size | Shape | Density (g/cm³) |
|---|---|---|---|
| Barium sulfate (Ba₂SO₄) | 1 to 3 µm | Stick pillar | 4.499 |
| Titanium dioxide (TiO₂) | 50 to 100 nm | Spherical | 3.8 to 4.2 |
| Calcium carbonate (CaCOs) | 2 to 5 µm | Amorphous | 2.93 |
| Clay (Al-SiO₂) | 0.2 to 0.8 µm | Plate-shaped crystal | 1.702 |
| Silicon dioxide (SiO₂) | 2 to 4 µm | Amorphous | 2.3 to 2.5 |
| Talc (3MgO.4SiO₂.H₂O) | Various | Plate-shaped crystal, massive | 2.58 to 2.83 |

In the compatibility evaluation, aluminum phosphate, zinc phosphate, magnesium phosphate, cobalt phosphate, manganese phosphate, and calcium phosphate in which various metals (Al, Mg, Mn, Ca, Zn, and Co) were substituted into phosphoric acid were used as the metal phosphate, and the basic physical properties of each metal phosphate are shown in the following Table 2:

**(Table 2)**

| Types of phosphate | Viscosity (cp) | pH | Solid content (%) |
|---|---|---|---|
| Aluminum phosphate | 10 to 30 | 1.5 to 3.0 | 40 to 70 |
| Zinc phosphate | 10 to 30 | 1.5 to 3.0 | 40 to 70 |
| Magnesium phosphate | 10 to 30 | 1.5 to 3.0 | 40 to 70 |
| Cobalt phosphate | 10 to 30 | 1.5 to 3.0 | 40 to 70 |
| Manganese phosphate | 10 to 30 | 1.5 to 3.0 | 40 to 70 |
| Calcium phosphate | 10 to 30 | 1.5 to 3.0 | 40 to 70 |

The results of evaluating solution compatibility of the mixtures of the inorganic particles and the metal phosphate in Tables 1 and 2 are shown in the following Table 3. Evaluation classification of the solution compatibility was indicated as ⊙: very good, ∘: good, △: insufficient, X: very insufficient.

**(Table 3)**

| | Aluminum phosphate | Zinc phosphate | Magnesium phosphate | Cobalt phosphate | Manganese phosphate | Calcium phosphate |
|---|---|---|---|---|---|---|
| Barium sulfate | ⊙ | ⊙ | ⊙ | ⊙ | ⊙ | ⊙ |
| Titanium dioxide | ○ | ○ | ○ | ○ | ○ | ○ |
| Calcium carbonate | ○ | ○ | ○ | ○ | ○ | ○ |
| Clay | ⊙ | ⊙ | ⊙ | ⊙ | ⊙ | ⊙ |
| Silicon dioxide | ○ | ○ | ○ | ○ | ○ | ○ |
| Talc | × | × | × | × | × | × |

As seen from the evaluation results of Table 3, all types of metal phosphates showed good compatibility with barium sulfate, titanium dioxide, calcium carbonate, clay, and silicon dioxide, and in particular, the compatibility of the metal phosphate with barium sulfate and clay was excellent. However, talc was confirmed to have poor compatibility when mixed with all types of metal phosphates, and thus, was excluded in the preparation of the insulating coating agent composition.

### Experimental Example 2

As a next experiment, an organic/inorganic composite was mixed with the mixed composition of the inorganic particles and the metal phosphate selected in Experimental Example 1 to evaluate solution compatibility and coating workability. The mixing ratio between the metal phosphate and the inorganic particles was 1:1, and the mixing wt% of the organic/inorganic composite and the mixture of the metal phosphate and the inorganic particles obtained in Table 3 was determined to be 30 to 70 wt%, respectively. As seen from Table 3, since a combination of metal phosphate and talc had poor solution compatibility in the present disclosure, it was excluded in the evaluation of compatibility with the organic/inorganic composite.

For the compatibility of the solution, an organic/inorganic composite was mixed (blended) with a mixture of the metal phosphate and the inorganic particles dispersed by a high speed agitator with an agitator (100 to 300 RPM) for 0.5 hours, the mixture was maintained at room temperature for 6 hours, and then the compatibility of the solution was evaluated depending on gelation and phase separation degrees of the solution.

In addition, for the coating workability, each solution was adjusted to have a specific gravity of 1.1 to 1.4, a prepared blank specimen (50PN400) was coated at a coating thickness of 5 to 7 µm using a bar coater and cured at 200 to 350°C for 20 to 60 seconds, and the surface conditions was evaluated. Herein, 50PN400 used as the blank specimen included 2.5 wt% of Si, 0.5 wt% of Al, and 0.2 wt% of Mn as a resistivity element component, had a plate thickness of 0.5 mm, and had a specimen size of 300 mm×80 mm. In order to sufficiently cure the coated surface, a curing temperature and a curing time were optimized for each solution. As shown in Table 4, the inorganic substitution ratio of the organic/inorganic composite was set to 20%, the types of inorganic nanoparticles substituted into the organic polymer resin were SiO₂, Al₂O₃, TiO₂, ZnO, ZrO₂, and MgO, and the inorganic nanoparticle size was 1 to 100 nm by type.

Evaluation classification of the solution compatibility and coating workability was indicated as ⊙: very good, ∘: good, △: insufficient, ×: very insufficient.

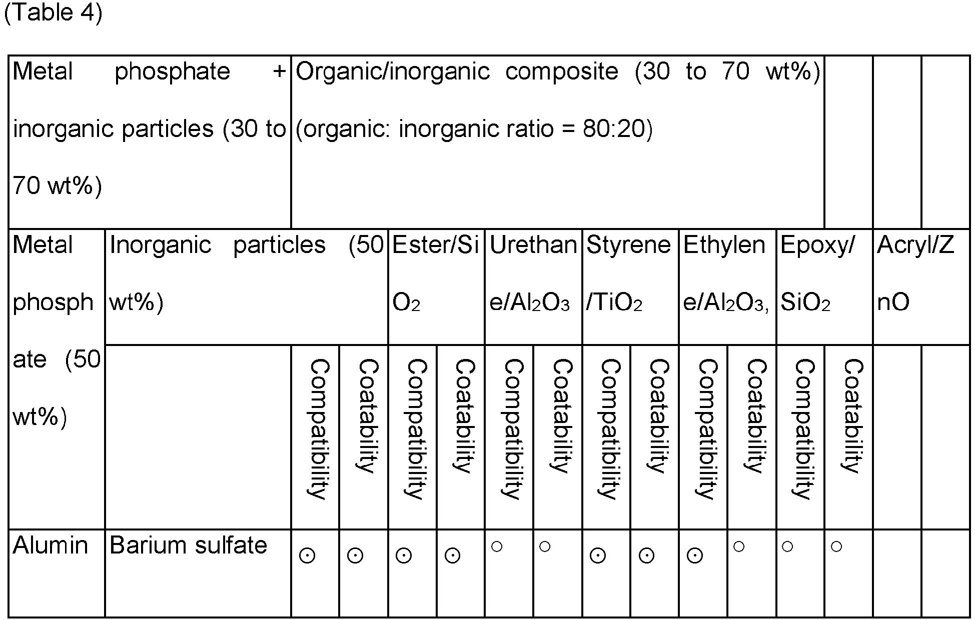

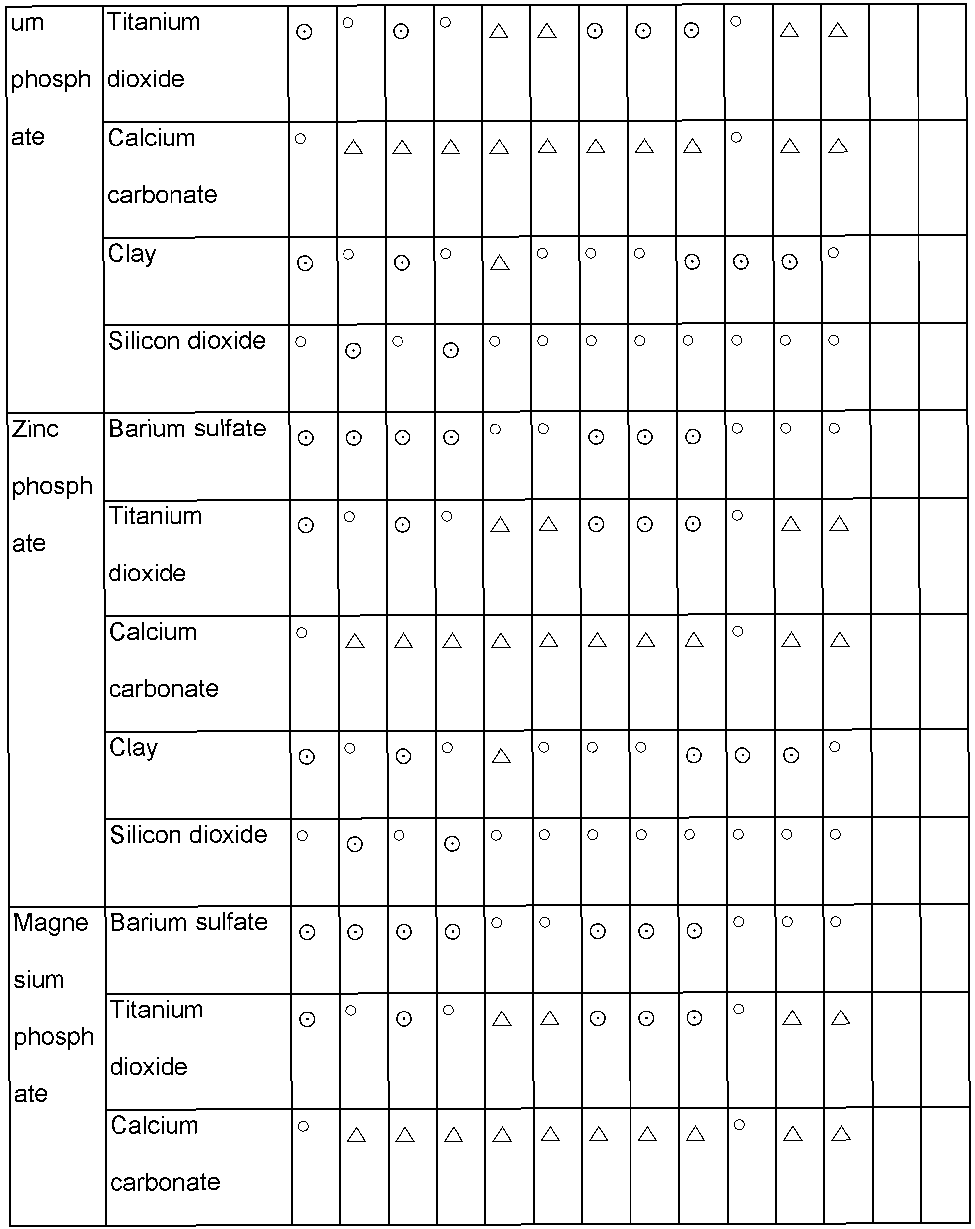

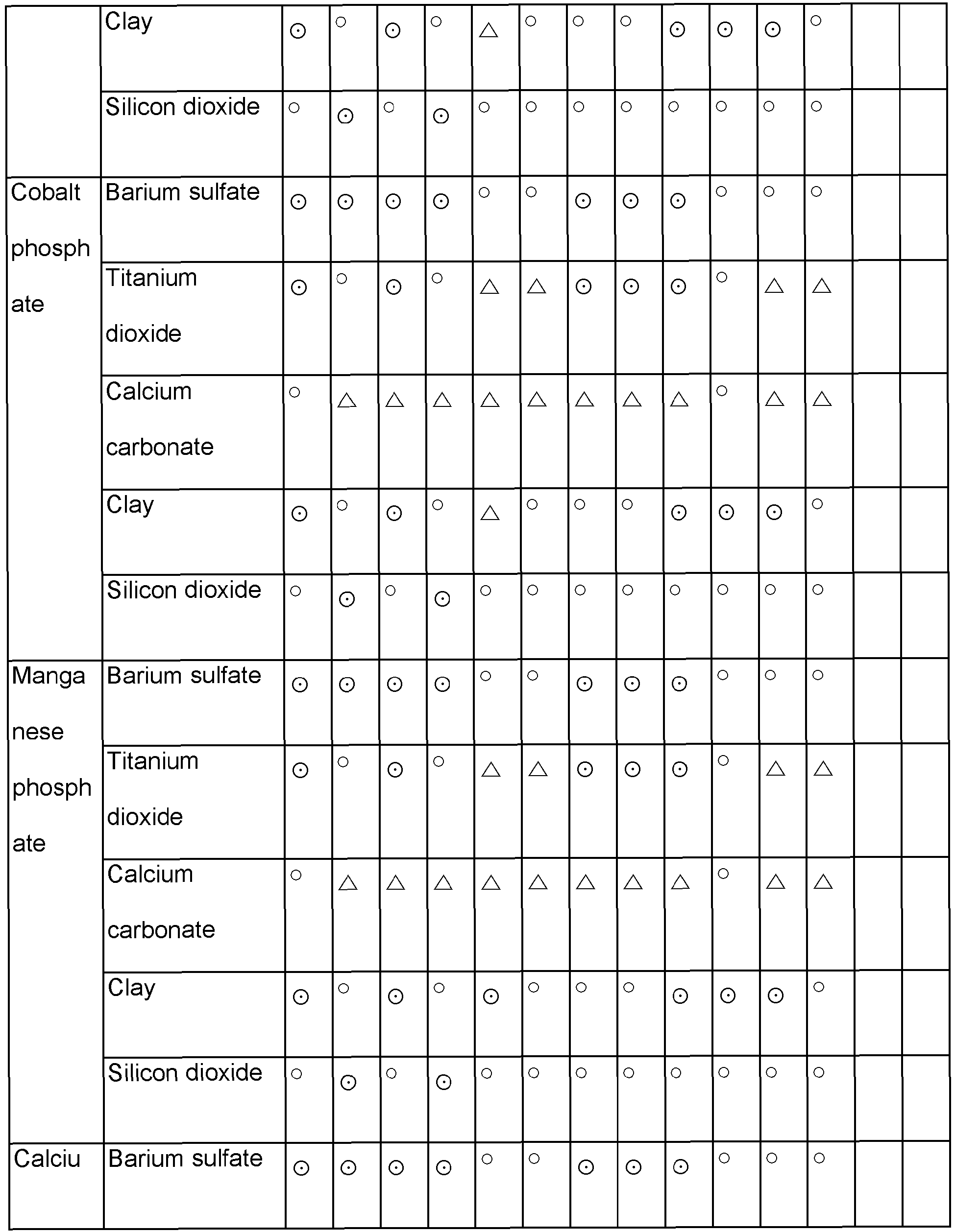

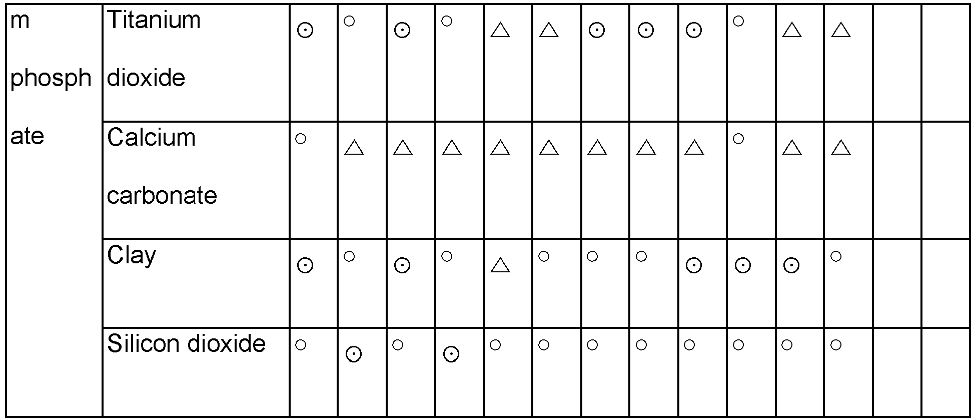

In Table 4, as seen from the results of evaluating the solution compatibility and the coating workability of the metal phosphate, the inorganic particles, and the organic/inorganic composite mixed solution, calcium carbonate and silicon dioxide having a larger inorganic particle size had poorer solution compatibility and coating workability than barium sulfate, titanium dioxide, and clay having a smaller particle size.

### Experimental Example 3

In the following Table 5, the composition ratios of the mixed solution formed of the mixed inorganic particles as the first composition, the mixed metal phosphate as the second composition, and the organic/inorganic composite as the third composition which was the example of the present disclosure and the comparative example are shown. In the example of the present disclosure, a mixture of two types of inorganic particles of the first inorganic particles and the second inorganic particles was used as the first composition, and the first inorganic particles and the second inorganic particles were mixed at a ratio of 7.3. In addition, as the composite metal phosphate used as the second composition, at least one phosphate was used, and in the present example, two types of metal phosphates were used and the first metal phosphate and the second metal phosphate were mixed at a ratio of 7:3. In the coating solution, 10 to 50 wt%, 10 to 50 wt%, and 20 to 60 wt% of the first composition, the second composition, and the third composition, respectively, based on 100 wt% of the coating solution were used. In addition, in the organic/inorganic composite applied in Table 5, the substitution ratio of the inorganic nanoparticles substituted into the organic resin was set to 20% as specified in Table 4. In contrast, the coating solution was prepared by mixing only the inorganic particles and the polymer resin without adding the metal phosphate in Comparative Examples 1 and 2, and mixing only the metal phosphate and the polymer resin without adding the inorganic particles in Comparative Examples 3 and 4. In addition, in Comparative Example 5, the coating solution was prepared at the same composition ratio as the examples, except that one type of inorganic particles was used.

**(Table 5)**

| | First composition | | | Second composition | | | Third composition (organic: inorganic ratio = 80:20) | |
|---|---|---|---|---|---|---|---|---|
| | Type | | Weight (wt%) | Type | | Weight (wt%) | Type | Weigh t (wt%) |
| | First inorgani c material | Second inorgani c material | | First metal phosphate | Second metal phosphate | | | |
| Exam ple 1 | Barium sulfate | Titaniu m dioxide | 30 | Aluminum phosphate | Zinc phosphate | 30 | Ester/SiO₂ | 40 |
| Exam ple 2 | Barium sulfate | Calcium carbona te | 30 | Aluminum phosphate | Zinc phosphate | 30 | Ester/SiO₂ | 40 |
| Exam ple 3 | Barium sulfate | Clay | 30 | Aluminum phosphate | Magnesium phosphate | 30 | Ester/SiO₂ | 40 |
| Exam ple 4 | Barium sulfate | Silicon dioxide | 30 | Aluminum phosphate | Magnesium phosphate | 30 | Ester/SiO₂ | 40 |
| Exam ple 5 | Titaniu m dioxide | Calcium carbona te | 30 | Aluminum phosphate | Cobalt phosphate | 30 | Ester/SiO₂ | 40 |
| Exam ple 6 | Titaniu m dioxide | Clay | 30 | Aluminum phosphate | Cobalt phosphate | 30 | Epoxy/Si O₂ | 40 |
| Exam ple 7 | Titaniu m dioxide | Silicon dioxide | 30 | Aluminum phosphate | Manganese phosphate | 30 | Epoxy/Si O₂ | 40 |
| Exam ple 8 | Calcium carbona te | Clay | 30 | Aluminum phosphate | Manganese phosphate | 30 | Epoxy/Si O₂ | 40 |
| Exam ple 9 | Calcium carbona te | Silicon dioxide | 30 | Aluminum phosphate | Calcium phosphate | 30 | Epoxy/Si O₂ | 40 |
| Exam ple 10 | Clay | Silicon dioxide | 30 | Aluminum phosphate | Calcium phosphate | 30 | Epoxy/Si O₂ | 40 |
| Exam ple 11 | Barium sulfate | Titaniu m dioxide | 30 | Aluminum phosphate | Zinc phosphate | 30 | Ethylene/ Al₂O₃ | 40 |
| Exam ple 12 | Barium sulfate | Calcium carbona te | 30 | Aluminum phosphate | Zinc phosphate | 30 | Ethylene/ Al₂O₃ | 40 |
| Exam ple 13 | Barium sulfate | Clay | 30 | Aluminum phosphate | Magnesium phosphate | 30 | Ethylene/ Al₂O₃ | 40 |
| Exam ple 14 | Barium sulfate | Silicon dioxide | 30 | Aluminum phosphate | Magnesium phosphate | 30 | Ethylene/ Al₂O₃ | 40 |
| Exam ple 15 | Titaniu m dioxide | Calcium carbona te | 30 | Aluminum phosphate | Cobalt phosphate | 30 | Ethylene/ Al₂O₃ | 40 |
| Example 16 | Titanium dioxide | Clay | 30 | Aluminum phosphate | Cobalt phosphate | 30 | Acryl/ZnO | 40 |
| Exam ple 17 | Titaniu m dioxide | Silicon dioxide | 30 | Aluminum phosphate | Manganese phosphate | 30 | Acryl/ZnO | 40 |
| Exam ple 18 | Calcium carbona te | Clay | 30 | Aluminum phosphate | Manganese phosphate | 30 | Acryl/ZnO | 40 |
| Exam ple 19 | Calcium carbona te | Silicon dioxide | 30 | Aluminum phosphate | Calcium phosphate | 30 | Acryl/ZnO | 40 |
| Exam ple 20 | Clay | Silicon dioxide | 30 | Aluminum phosphate | Calcium phosphate | 30 | Acryl/ZnO | 40 |
| Exam ple 21 | Barium sulfate | Titaniu m dioxide | 30 | Aluminum phosphate | Zinc phosphate | 30 | Urethane/ Al₂O₃ | 40 |
| Exam ple 22 | Barium sulfate | Calcium carbona te | 30 | Aluminum phosphate | Magnesium phosphate | 30 | Urethane/ Al₂O₃ | 40 |
| Exam ple 23 | Barium sulfate | Clay | 30 | Aluminum phosphate | Cobalt phosphate | 30 | Urethane/ Al₂O₃ | 40 |
| Example 24 | Barium sulfate | Silicon dioxide | 30 | Aluminum phosphate | Manganese phosphate | 30 | Urethane/Al₂O₃ | 40 |
| Exam ple 25 | Barium sulfate | Barium sulfate | 30 | Aluminum phosphate | Calcium phosphate | 30 | Urethane/ Al₂O₃ | 40 |
| Exam ple 26 | Calcium carbona te | Titaniu m dioxide | 30 | Aluminum phosphate | Zinc phosphate | 30 | Styrene/Ti O₂ | 40 |
| Exam ple 27 | Calcium carbona te | Calcium carbona te | 30 | Aluminum phosphate | Magnesium phosphate | 30 | Styrene/Ti O₂ | 40 |
| Exam ple 28 | Calcium carbona te | Clay | 30 | Aluminum phosphate | Cobalt phosphate | 30 | Styrene/Ti O₂ | 40 |
| Exam ple 29 | Calcium carbona te | Silicon dioxide | 30 | Aluminum phosphate | Manganese phosphate | 30 | Styrene/Ti O₂ | 40 |
| Exam ple 30 | Calcium carbona te | Barium sulfate | 30 | Aluminum phosphate | Calcium phosphate | 30 | Styrene/Ti O₂ | 40 |
| Comp arativ e Example 1 | Barium sulfate | - | 50 | - | - | - | Melamine | 50 |
| Comp arativ e Exam ple 2 | Calcium carbona te | Silicon dioxide | 50 | - | - | - | Melamine | 50 |
| Comp arativ e Exam ple 3 | - | - | | Aluminum phosphate | - | 60 | Epoxy | 40 |
| Comp arativ e Exam ple 4 | - | - | | Magnesiu m chromate | - | 60 | Acryl | 40 |
| Comp arativ e Exam ple 5 | Titaniu m dioxide | - | 30 | Aluminum phosphate | Cobalt phosphate | 30 | Ester/SiO₂ | 40 |

The surface conditions, the insulation, the corrosion resistance, the high-temperature thermal resistance, and the recoatability were evaluated after applying the coating solution mixed at a composition ratio of Table 5 by a bar coater and curing it at 200 to 400°C for 30 to 40 seconds, and are shown in the following Table 6. In order to sufficiently cure the coated surface, the curing temperature and the curing time were optimized for each solution. In order to obtain a constant coating thickness for each coating solution, the solid content of the coating solution was adjusted to around 30%, and application was performed evenly at about 6 µm with varying bar coater number. Herein, the coating thickness was measured using a thickness meter (delta scope).

The measurement methods of each property are as follows:
Surface condition: evaluated as degrees of streak and defect occurrence on the surface after coating and curing. In the present experiment, when the area of streak and defect occurrence on the surface was 5% or less, the surface condition was indicated as ⊙ (very good), when 20% or less, indicated as ∘ (good), when 30% or less, indicated as △ (normal), and when 50% or more, indicated as × (poor).

Insulation: insulation was measured with Franklin Insulation Tester, and the tester is a single plate test device which is a device for measuring the surface insulation resistance of an electrical steel sheet under constant pressure and constant voltage. A current range was 0 to 1.000 Amp, and a measurement method of insulation was performed by placing one measurement specimen on a plate so that the contactor of all electrodes was in contact, and then pressing a pressure to 300 psi (20.4 atm) by a pressurization device. When the pressure became a test pressure, a slip resistor was adjusted, and an ammeter scale was read under a voltage of 0.5 V, which was evaluated as an interlayer insulation value. 5 sheets were evaluated for each test solution. In the present experiment, measurement was performed with an insulation resistance meter (ASTM A717-1), and when the insulation resistance value was 100 Ω·cm²/lamination or more, the insulation was indicated as ⊙ (very good), when 60 Ω·cm²/lamination or more, indicated as ∘ (good), when 40 Ω·cm²/lamination or more, indicated as △ (normal), and when 20 Ω·cm²/lamination or more, indicated as × (poor).

Corrosion resistance: corrosion resistance was evaluated as to the presence or absence of rust occurrence on the specimen, after being exposed to a 5% sodium chloride (NaCl) solution at 35°C for 8 hours, and in the present experiment, when a rust occurrence area was 5% or less, corrosion resistance was indicated as ⊙ (very good), when 10% or less, indicated as ∘ (good), when 20% or less, indicated as △ (normal), and when 50% or more, indicated as × (poor).

High-temperature thermal resistance: the high-temperature thermal resistance was performed by continuous rating (180+30°C, 2500 h) of IEC60404-12, and degrees of change in the insulation resistance, the adhesiveness (cylindrical mandrel bending), and the drip rate before/after the high-temperature thermal resistance evaluation were evaluated. After the continuous rating evaluation, when the degrees of change in the insulation resistance, the adhesiveness, and the drip rate were less than 5%, the high-temperature thermal resistance was indicated as ⊙ (very good), when less than 10%, indicated as ∘ (good), when less than 30%, indicated as △ (normal), and when 30% or more, indicated as × (poor).

Adhesiveness: adhesiveness was represented as a minimum arc diameter having no coating peeling when a tested specimen was bent at 180° in contact with circular arcs of 5, 10, 20, 30, 40 mmΨ. Herein, when the minimum arc diameter was 5 mmΨ or less, the adhesiveness was indicated as ⊙ (very good), when 10 mmΨ or less, indicated as ∘ (good), when 20 mmΨ or less, indicated as △ (normal), and when more than 20 mmΨ, indicated as × (poor).

Recoatability: recoatability was evaluated by applying the coating solution of Comparative Example 1 as the second coating solution on the coating layer of the specimen coated with the coating solution and drying, and then evaluating the surface condition of the second coating layer and the adhesiveness to the first coating layer thereof by the method described above. In the present experiment, the adhesiveness to the second coating layer was measured with a Mandrel Bend Tester (ISO 1519), and when the adhesiveness was 5 mmΨ or less, the recoatability was indicated as ⊙ (very good), when 10 mmΨ or less, indicated as o(good), when 20 mmΨ or less, indicated as △ (normal), and when more than 20 mmΨ, indicated as × (poor).

**(Table 6)**

| | Surface condition | Insulation | Corrosion resistance | High-temperature thermal resistance | Adhesiveness | Recoata bility |
|---|---|---|---|---|---|---|
| Example 1 | ○ | ⊙ | ⊙ | ⊙ | ○ | ⊙ |
| Example 2 | ○ | ⊙ | ⊙ | ⊙ | ○ | ⊙ |
| Example 3 | ○ | ○ | ○ | ⊙ | ○ | ⊙ |
| Example 4 | ⊙ | ⊙ | ⊙ | ⊙ | ⊙ | ○ |
| Example 5 | ⊙ | ⊙ | ⊙ | ⊙ | ⊙ | ⊙ |
| Example 6 | ⊙ | ⊙ | ⊙ | ⊙ | ○ | ⊙ |
| Example 7 | ⊙ | ○ | ○ | ○ | ⊙ | ○ |
| Example 8 | ⊙ | ⊙ | ○ | ○ | ⊙ | ⊙ |
| Example 9 | ⊙ | ⊙ | ○ | ○ | ⊙ | ⊙ |
| Example 10 | ○ | ⊙ | ○ | ⊙ | ○ | ⊙ |
| Example 11 | ○ | ⊙ | ○ | ⊙ | ○ | ○ |
| Example 12 | ○ | ○ | ○ | ⊙ | ○ | ⊙ |
| Example 13 | ○ | ⊙ | ⊙ | ⊙ | ○ | ⊙ |
| Example 14 | ○ | ⊙ | ⊙ | ⊙ | ○ | ⊙ |
| Example 15 | ○ | ⊙ | ⊙ | ⊙ | ○ | ⊙ |
| Example 16 | ○ | ○ | ○ | ○ | ○ | ⊙ |
| Example 17 | ○ | ⊙ | ○ | ○ | ○ | ⊙ |
| Example 18 | ○ | ⊙ | ○ | ○ | ○ | ○ |
| Example 19 | ○ | ○ | ⊙ | ○ | ○ | ⊙ |
| Example 20 | ○ | ⊙ | ⊙ | ○ | ○ | ⊙ |
| Example 21 | ⊙ | ⊙ | ○ | ○ | ○ | ○ |
| Example 22 | ⊙ | ⊙ | ○ | ○ | ○ | ○ |
| Example 23 | ⊙ | ⊙ | ○ | ○ | ○ | ○ |
| Example 24 | ⊙ | ⊙ | ○ | ○ | ○ | ○ |
| Example 25 | ⊙ | ⊙ | ○ | ○ | ○ | ○ |
| Example 26 | ○ | ⊙ | ○ | ○ | ○ | ○ |
| Example 27 | ○ | ⊙ | ○ | ○ | ○ | ○ |
| Example 28 | ○ | ⊙ | ○ | ○ | ○ | ○ |
| Example 29 | ○ | ⊙ | ○ | ○ | ○ | ○ |
| Example 30 | ○ | ⊙ | ○ | ○ | ○ | ○ |
| Compar ative Example 1 | Δ | ○ | Δ | × | Δ | ○ |
| Compar ative Example 2 | Δ | ○ | Δ | × | Δ | ⊙ |
| Compar ative Example 3 | ○ | Δ | ○ | Δ | ⊙ | Δ |
| Compar ative Example 4 | ○ | Δ | ○ | Δ | ⊙ | Δ |
| Compar ative Example 5 | Δ | ○ | Δ | Δ | ○ | ○ |

As seen from the evaluation results of Table 6, the surface conditions, the insulation, the corrosion resistance, the high-temperature thermal resistance, the adhesiveness, and the recoatability of the example solutions were all better than those of the comparative examples. The example solutions had some property differences depending on the type of the organic/inorganic composite, but all of their properties were overall excellent. However, it was confirmed that Comparative Examples 1 to 4 which did not include the mixed composition of the two types of mixed inorganic particles, the metal phosphate, and the organic/inorganic composite and Comparative Example 5 which included the mixed composition of the inorganic particles, the metal phosphate, and the organic/inorganic composite, but included only one type of inorganic particles had some poor properties among the surface condition, the insulation, the corrosion resistance, the high-temperature thermal resistance, the adhesiveness, and the recoatability.

The present disclosure is not limited by the above exemplary embodiments and may be manufactured in various forms different from each other, and it may be understood that a person with ordinary skill in the art to which the present disclosure pertains may carry out the present disclosure in another specific form without modifying the technical idea or essential feature of the present disclosure. Therefore, it should be understood that the exemplary embodiments described above are illustrative and are not restrictive in all aspects.

### [Description of Symbols]

| | | | |
|---|---|---|---|
| 100: | Electrical steel sheet | 10: | Electrical steel sheet substrate |
| 20: | Insulating coating | | |

## Claims

1. An insulating coating composition for an electrical steel sheet comprising:
10 to 50 wt% of a first composition including first inorganic particles and second inorganic particles;
10 to 50 wt% of a second composition including a metal phosphate; and
20 to 60 wt% of a third composition including an organic/inorganic composite in which inorganic nanoparticles are substituted into an organic resin, based on 100 wt% of the total composition.

2. The insulating coating composition for an electrical steel sheet of claim 1, wherein:
the first inorganic particles and the second inorganic particles are different types from each other, and
selected from the group consisting of barium sulfate (Ba₂SO₄), titanium dioxide (TiO₂), calcium carbonate (CaCOs), clay (Al₂Si₂O₅(OH)₄), and silicon dioxide (SiO₂), respectively.

3. The insulating coating composition for an electrical steel sheet of claim 1, wherein:
the metal phosphate
includes one or more metals selected from the group consisting of Al, Co, Ca, Zn, Mn, Mg, Zr, and Fe.

4. The insulating coating composition for an electrical steel sheet of claim 1, wherein:
when the metal phosphate includes a composite metal phosphate of a first metal phosphate and a second metal phosphate,
the first metal phosphate is an Al phosphate, and the second metal phosphate includes a metal selected from the group consisting of Co, Ca, Zn, Mn, Mg, Zr, and Fe.

5. The insulating coating composition for an electrical steel sheet of claim 4, wherein:
the first metal phosphate is included at 60 to 80 wt% and the second metal phosphate is included at 20 to 40 wt%, based on 100 wt% of the second composition.

6. The insulating coating composition for an electrical steel sheet of claim 1, wherein:
the organic resin is one or more selected from the group consisting of epoxy-based resins, ester-based resins, acryl-based resins, styrene-based resins, urethane-based resins, and ethylene-based resins.

7. The insulating coating composition for an electrical steel sheet of claim 1, wherein:
the inorganic nanoparticles are one or more selected from the group consisting of SiO₂, Al₂O₃, TiO₂, MgO, ZnO, and ZrO₂.

8. The insulating coating composition for an electrical steel sheet of claim 1, wherein:
the organic/inorganic composite
is one or more selected from the group consisting of epoxy/SiO₂, epoxy/Al₂O₃, epoxy/TiO₂, ester/SiO₂, ester/ZnO, acryl/SiO₂, acryl/Al₂O₃, acryl/ZnO, acryl/ZrO₂, styrene/SiO₂, styrene/TiO₂, styrene/MgO, urethane/SiO₂, urethane/Al₂O₃, urethane/ZnO, ethylene/SiO₂, ethylene/Al₂O₃, and ethylene/ZnO.

9. The insulating coating composition for an electrical steel sheet of claim 1, wherein:
a substitution rate of the inorganic nanoparticles substituted into the organic resin in the organic/inorganic composite is 1 to 50%.

10. The insulating coating composition for an electrical steel sheet of claim 1, wherein:
the inorganic nanoparticles have an average particle size of 1 to 100 nm.

11. An electrical steel sheet comprising:
an electrical steel sheet substrate and
an insulating coating placed on a surface of the electrical steel sheet substrate,
wherein the insulating coating includes:
10 to 50 wt% of a first composition including first inorganic particles and second inorganic particles; 10 to 50 wt% of a second composition including a metal phosphate; and 20 to 60 wt% of a third composition including an organic/inorganic composite in which inorganic nanoparticles are substituted into an organic resin, based on 100 wt% of the total composition.

12. The electrical steel sheet of claim 11, wherein:
the insulating coating has a thickness of 1 to 10 µm.

13. A method for manufacturing an electrical steel sheet, the method comprising:
preparing an electrical steel sheet substrate;
applying the insulating coating composition of any one of claims 1 to 10 on a surface of the electrical steel sheet substrate; and
heat-treating the electrical steel sheet substrate on which the insulating coating composition has been applied.
